# EUROPEAN PATENT SPECIFICATION

(11) **EP 4 314 920 B1**
(45) Date of publication and mention of the grant of the patent: **04.11.2026**
(21) Application number: 22701085.7
(22) Date of filing: 04.01.2022
(51) Int. Cl.: G02B 6/44

(54) **CABLE MOUNTING CLAMPS**
KABELBEFESTIGUNGSKLEMMEN
PINCES DE MONTAGE DE CÂBLE

(30) Priority: 31.03.2021 US 202163168897 P; 14.04.2021 US 202163174829 P; 15.09.2021 US 202163244567 P
(43) Date of publication of application: 07.02.2024
(73) Proprietor: AFL Telecommunications LLC, Duncan, SC 29334 (US)
(72) Inventor: VOGEL, Mark, Duncan, South Carolina 29334 (US); CIGNARALE, Joseph, Duncan, South Carolina 29334 (US); COURCHAINE, Wilfred J., Duncan, South Carolina 29334 (US)
(74) Representative: Serjeants LLP
(86) International application number: PCT/US2022/011110
(87) International publication number: WO 2022/211872

(56) References cited:
- EP-A1- 2 437 090
- JP-A- 2003 348 738
- JP-A- 2020 154 168
- US-A- 5 787 219

## Description

### FIELD

The present disclosure relates generally to cable mounting clamps, such as for mounting cables to enclosure.

### BACKGROUND

Secure mounting of cables during installation thereof is a necessity in a variety of environments. One such environment is in fiber optics, and in particular in the fiber optic inside office environment. In such environment, fiber optic distribution enclosures are utilized to manage optical fiber distribution. An enclosure typically accommodates one or more fiber trays, each of which includes one or more cassettes. Within a cassette, an incoming optical fiber may be spliced, split, etc., and outgoing optical fibers may be connected to the cassette and incoming optical fibers to provide fiber optic connections within the inside office environment. The incoming cables which include incoming optical fibers must be secured to the enclosures to facilitate secure, reliable connections.

EP 2437090 A1 discloses a cable mounting clamp (or cable fixation module) according to the preamble of claim 1. Cable mounting clamps are also disclosed in JP 2003-348738 A, JP 2020-154168 A and US 5787219 A.

Accordingly, improved cable mounting clamps are desired. For example, cable mounting clamps which include features for relieving torsional or bending stresses in associated cables would be advantageous.

### BRIEF DESCRIPTION

Aspects and advantages of the invention will be set forth in the following description, or may be obvious from the description, or may be learned through practice of the invention.

The invention concerns a cable mounting clamp for mounting a cable to a surface, according to claim 1.

The invention also concerns a fiber optic distribution enclosure according to claim 10.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF FIGURES

A full and enabling disclosure of the present invention, including the best mode thereof, directed to one of ordinary skill in the art, is set forth in the specification, which makes reference to the appended figures, in which:
Fig. 1 is a rear perspective view of a fiber optic distribution enclosure in accordance with embodiments of the present disclosure;
Fig. 2 is a top perspective view of a cable assembly and cable mounting clamp mounted to a wall of a fiber optic distribution enclosure in accordance with embodiments of the present disclosure;
Fig. 3 is a top perspective view of a cable assembly and cable mounting clamp mounted to a wall of a fiber optic distribution enclosure, with caps exploded therefrom, in accordance with embodiments of the present disclosure;
Fig. 4 is a bottom perspective view of a cable mounting clamp in accordance with embodiments of the present disclosure;
Fig. 5 is a perspective view of an embodiment of a surface of the enclosure at which the cable mounting clamp is attachable in accordance with embodiments of the present disclosure;
Fig. 6 is a perspective cross-sectional view of an embodiment of the cable mounting clamp in accordance with embodiments of the present disclosure;
Fig. 7 is a bottom perspective view of an embodiment of the cable mounting clamp in accordance with embodiments of the present disclosure;
Fig. 8 is a perspective view of an embodiment of the cable mounting clamp in a partially inserted position accordance with embodiments of the present disclosure;
Fig. 9 is a perspective view of an embodiment of the cable mounting clamp in a fully inserted position accordance with embodiments of the present disclosure;
Fig. 10 is a bottom-up view of an embodiment of a cable mounting clamp in a partially inserted position accordance with still other embodiments of the present disclosure;
Fig. 11 is a bottom-up view of an embodiment of a cable mounting clamp in a fully inserted position accordance with still other embodiments of the present disclosure;
Fig. 12 is a perspective view of an embodiment of a surface of the enclosure at which the cable mounting clamp is attachable in accordance with embodiments of the present disclosure;
Fig. 13 is a perspective cross-sectional view of an embodiment of the cable mounting clamp in accordance with embodiments of the present disclosure;
Fig. 14 is a bottom perspective view of an embodiment of the cable mounting clamp in accordance with embodiments of the present disclosure;
Fig. 15 is an exploded perspective view of components of a cable mounting clamp in accordance with further embodiments of the present disclosure;
Fig. 16 is an exploded perspective view of components of a cable mounting clamp in accordance with further embodiments of the present disclosure;
Fig. 17 is an exploded perspective view of an exemplary embodiment of a cable assembly of the fiber optic distribution enclosure in accordance with embodiments of the present disclosure;
Fig. 18 is a cross-sectional view of an exemplary embodiment of a cable assembly of the fiber optic distribution enclosure in accordance with embodiments of the present disclosure;
Fig. 19 is a cross-sectional view of an exemplary embodiment of a cable assembly of the fiber optic distribution enclosure in accordance with embodiments of the present disclosure;
Fig. 20 is a perspective view of an embodiment of a cable mounting clamp and fiber optic distribution enclosure in accordance with embodiments of the present disclosure;
Fig. 21 is a perspective view of an embodiment of a cable mounting clamp and fiber optic distribution enclosure in accordance with embodiments of the present disclosure;
Fig. 22 is a perspective view of an embodiment of a cable mounting clamp and fiber optic distribution enclosure in accordance with embodiments of the present disclosure;
Fig. 23 is a perspective view of an embodiment of a cable mounting clamp in accordance with embodiments of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention as defined by the claims.

For instance, features illustrated or described as part of one embodiment can be used with another embodiment. Thus, it is intended that the present invention covers such modifications and variations as come within the scope of the appended claims.

As used herein, references to a longitudinal axis may include references to a direction parallel or co-directional to the longitudinal axis, referred to herein as a longitudinal direction.

Cable mounting clamps in accordance with various embodiments of the present disclosure are shown and described herein.

Embodiments of cable mount clamps provided herein allow for improved mounting and installation, such as allowing for installation without the use of tools or mechanical fasteners when mounting the clamp and cable to the enclosure surface. Embodiments provided herein allow for mechanical retention without of a cable mounting base to a surface of the enclosure via a springing tong structure and an insertable fork structure.

Embodiments provided herein may allow for improved positional maneuverability to accommodate breakout lengths. Certain embodiments including hook and loop straps may allow for bridge lance positions at the roller tube to have a range of distances or orientations relative to bridge lances formed at the mount surface of the fiber optic distribution enclosure. More bridge lance positions can be added to address additional, smaller size trunk cables, in contrast to clips that take up more space and require two or more bridge lances.

Cable mounting clamps in accordance with the present disclosure may further include one or more features as disclosed in U.S. Patent Application Serial No. 15/862,225 filed January 4, 2018 and/or U.S. Patent Application Serial No. 17/077,500 filed 10/22/2020.

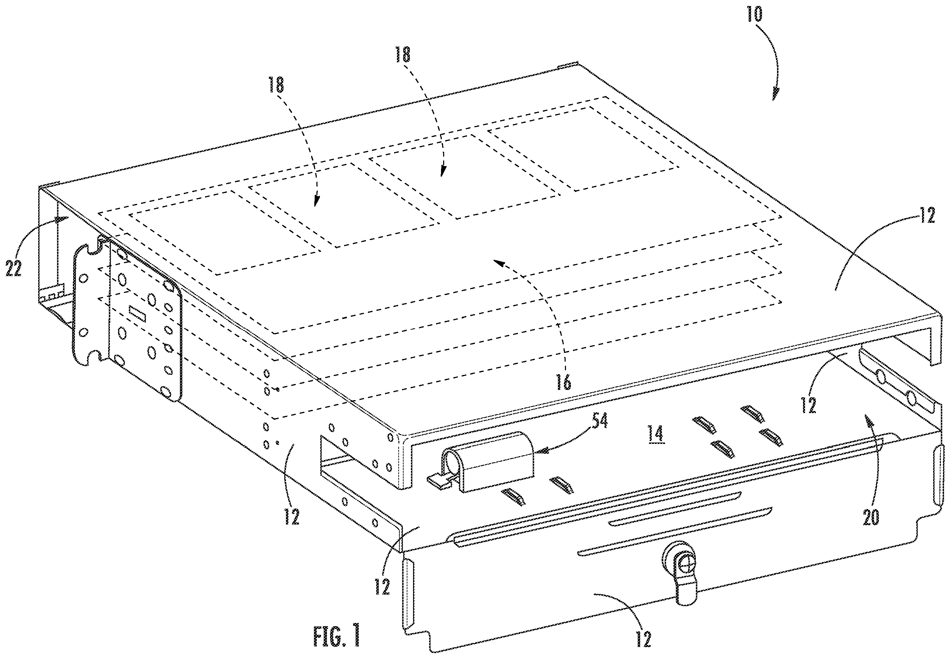

Referring now to Fig. 1, one embodiment of a fiber optic distribution enclosure 10 is provided. Fiber optic distribution enclosures 10 are generally utilized to manage optical fiber distribution, typically in inside office environments. Enclosure 10 includes one or more walls 12, as shown, which define an interior 14 of the enclosure. Within the enclosure, one or more trays 16 may be housed. Each tray 16 may include one or more cassettes 18.

In general, an incoming fiber optic cable which includes a plurality of optical fibers may enter the interior 14 of the enclosure 10 via a first opening, such as a rear opening 20, defined by the walls 12. Optical fibers of the incoming fiber optic cable may extend from the cable within the interior 14. These optical fibers may be routed into one or more of the cassettes 18, and spliced, split, etc. within the cassettes 18. Outgoing optical fibers may also be routed to the cassettes 18, and connected to the incoming optical fibers via splicing, splitting, etc. These outgoing optical fibers may be routed from the cassettes 18, and may exit the interior 14 of the enclosure 10 via a second opening, such as a front opening 22, of the enclosure 10.

The incoming fiber optic cable must be secured to the enclosure 10 to facilitate secure, reliable connections of the incoming optical fibers, and to mitigate the risk of breaking or damaging such incoming optical fibers. Accordingly, the present disclosure is directed to cable assemblies 50 which are mountable to surfaces, such to the walls 12 of enclosures 10, and fiber optic distribution enclosures 10 including cable assemblies 50 as depicted and described herein.

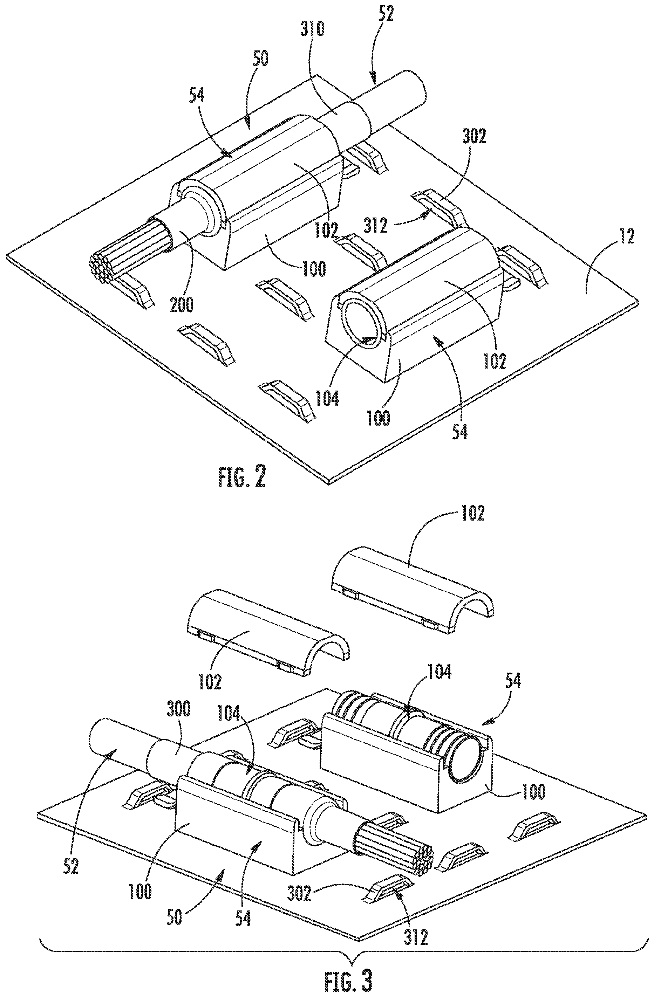

Referring to Figs. 2-3, a cable assembly 50 in accordance with the present disclosure includes a cable 52 and one or more cable mounting clamps 54. The cable mounting clamp(s) 54 securely and removably mount the cable 52 to an associated surface, such as in exemplary embodiments a wall 12 of an enclosure 10. Such secure, removable mounting is a direct mounting, with direct contact between the clamp 54 and surface (such as the wall 12), thus eliminating the need for additional mounting plates, etc. to be installed (such as in the enclosure 10). Cable mounting clamps 54 in accordance with the present disclosure advantageously facilitate efficient mounting and removal of cables 52, and further advantageously facilitate relief of torsional or bending stresses in the cables 52. Cable mounting clamps 54 in accordance with the present disclosure are particularly advantageous when multiple mounting locations are required for a cable 52 (and/or smaller furcated subassemblies thereof). The use of such cable mounting clamps 54 can significantly reduce cable torsional or bending stress issues, and can also advantageously improve ease of assembly by providing increased tolerances for the cable mounting clamp 54 locations relative to each other.

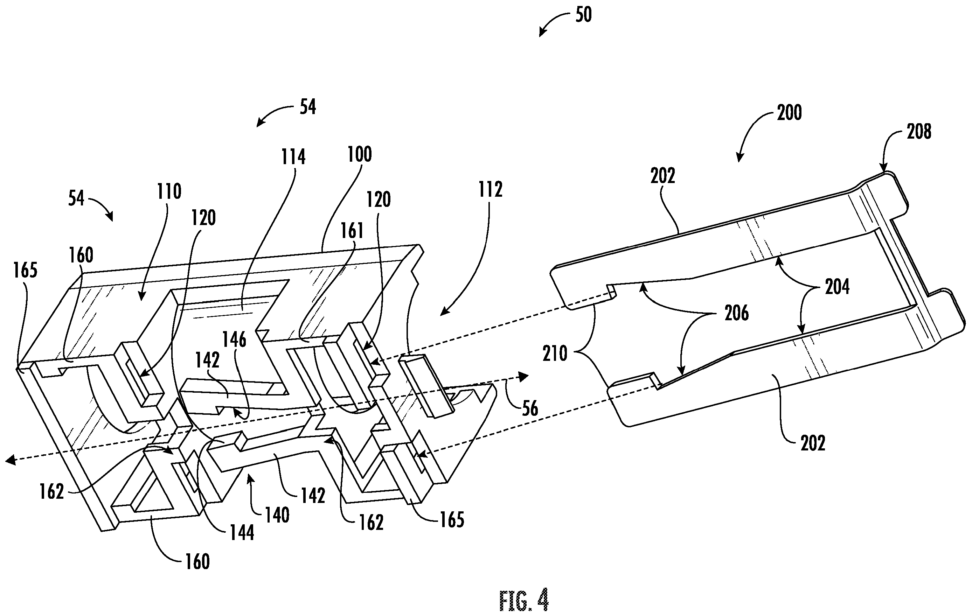

Referring now to Fig. 4-19, various embodiments of cable assemblies 50 and cable mounting clamps 54 in accordance with the present disclosure are provided. In general, a cable mounting clamp 54 in accordance with the present disclosure may include a base 100. Base 100 may generally be removably connectable to a surface (such as a wall 12) to securely and removable mount the clamp 54 to the surface. In certain embodiments, the cable mounting clamp 54 may include a roller tube 104, such as depicted in Figs. 2-3. Still various embodiments of the cable mounting clamp 54 may include a cap 102 positioned on top of the cable 52 and/or roller tube 104 and secured to the base 100. Roller tube 104 may generally be mounted to the base 100, such as positioned between the base 100 and cap 102 and/or removably secured to the base 100. Roller tube 104 may advantageously be translatable along an axis of the clamp 54 relative to the base 100, and may facilitate translation of a cable 52 disposed therein. Further, in some embodiments, roller tube 104 may be rotatable about the axis of the clamp 54, and may facilitate rotation of a cable 52 disposed therein. Cable 52 may extend through the roller tube 104 and between the base 100 and cap 102, and may advantageously be translatable (and, optionally, rotatable) relative to the base 100 with the roller tube 104.

Base 100 generally includes an outer body 110 which defines an inner channel 112. The inner channel 112 extends along an axis 56 of the clamp 54. In exemplary embodiments, the axis 56 is a longitudinal axis 56 of the clamp 54. A support ramp 114, which may be or include an inner surface of the base 100, may be disposed within and may partially define the inner channel 112. Support ramp 114 may have an arcuate shape about the axis 56, and thus for example be an arcuate surface as shown.

The roller tube 104 may be positionable within (and, when assembled, disposed within) the inner channel 112. Further, the roller tube 104 may be moveable mounted on the support ramp 114, such as in exemplary embodiments translatable along the axis 56 relative to the support ramp 114. For example, roller tube 104 may be positioned in the inner channel 112 such that the roller tube 104 extends along the axis 56. Further, the roller tube 104 may be in contact with the support ramp 114. Translation along the axis 56 may be relative to both the base 100 and the cap 102 (if utilized).

Base 100 forms a fork opening 120 configured to receive a fork structure 200. The fork structure 200 is slidable along the longitudinal axis 56 through the fork opening 120. Base 100 may form a pair of fork openings 120 corresponding to a pair of prongs 202 of the fork structure 200. The prongs 202 are extended along the longitudinal axis 56. The fork opening 120 forms a pathway through which the prongs 202 of the fork structure 200 are extendable. Accordingly, the fork opening 120 is configured to receive the prong 202 of the fork structure 200 along the longitudinal axis 56 when the fork structure 200 is inserted through the base 100.

A tong structure 140 is connected to base 100. In certain embodiments, the base 100 and the tong structure 140 together form an integral, unitary structure, and the fork structure 200 is separable from the base 100 and the tong structure 140. The tong structure 140 is extending along the longitudinal axis 56 and positioned between the inner channel 112 and the surface, such as the walls 12 of enclosure 10 depicted in Figs. 2-3. The tong structure 140 includes a pair of members 142 each extending substantially along the longitudinal axis 56. Each member 142 forms a tooth 144 at a terminal end of each member 142. The terminal end may generally be defined as distal along the longitudinal axis 56 from which the fork structure 200 is inserted through the fork opening 120.

The members 142 of the tong structure 140 are sprung along an orthogonal direction relative to the longitudinal axis 56. In particular embodiments, when sliding or otherwise inserting the fork structure 200 into the base 100 via the fork openings 120, a substantially flat or longitudinal face 204 of the prongs 202 relative to the longitudinal axis 56 presses against the members 142 of the tong structure 140. The prongs 202 of the fork structure 200 apply a force at the members 142 toward the longitudinal axis 56, such as a compressive force pressing the teeth 144 toward one another. Without the fork structure 200 inserted into the base 100, the members 142 are extending away from the longitudinal axis 56. In various embodiments, the prong 202 includes an angled face 146 corresponding to the members 142 of the tong structure 140. Angled face 206 at prong 202 extends away from the longitudinal axis 56 from an end proximate to the fork opening 120 through which the fork structure 200 is inserted. Angled face 206 at prong 202 corresponds to angled face 146 at the member 142.

In various embodiments, the fork structure 200 includes a tab or stop wall 208 extending along a height direction up from the surface. The prongs 202 extend along the longitudinal direction from the stop wall 208. The stop wall 208 may further form a tab, wing, or other feature at which a user grabs the fork structure 200 and desirably insert and remove the fork structure 200 from the base 100.

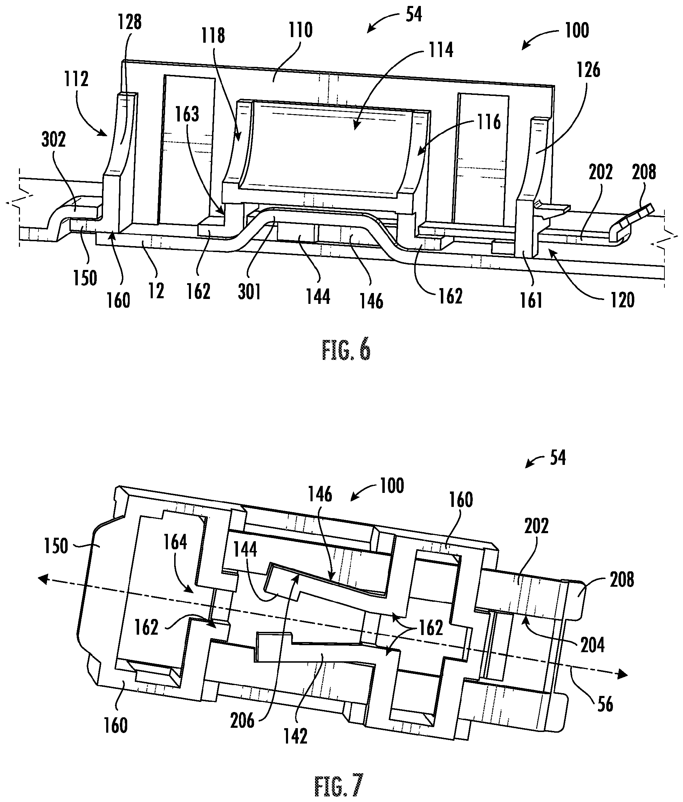

The fork structure 200 may form a hook 210 at a distal end of the prong 202 from the stop wall 208. In certain embodiments, the distal end of the angled face 206 forms a substantially 90 degree bend forming the hook 210. The hook 210 at the fork structure 200 may be configured to latch or catch onto a wall 163 (Fig. 6) extended along a height from the surface. The wall 163 may form a pillar or column supporting the support ramp 114 from a platform 160 configured to abut the surface.

When the fork structure 200 is inserted into base 100, each prong 202 is in sliding contact with the tong structure 140. The angled faces 146, 206 slide across one another until the longitudinal face 204 of the prong 202 contacts the member 142 of the tong structure 140, As the longitudinal face 204 slides across the tong structure 140, the prong 202 pushes or compresses the members 142 toward one another, such as toward the longitudinal axis 56. The stop wall 208 may form a surface configured to limit further extension of the prongs 202 into the base 100. Additionally, or alternatively, hooks 210 may latch onto the base 100 and affix the base 100 onto the surface, such as further described herein.

Embodiments of the fork structure 200 provided herein may be fully removeable from the base 100. In particular, prongs 202 at the fork structure 200 are fully insertable through the fork opening 120 at the base 100. Embodiments of the stop wall 208 may abut the base 100 when the prongs 202 are fully inserted through the fork opening 120 at the base 100.

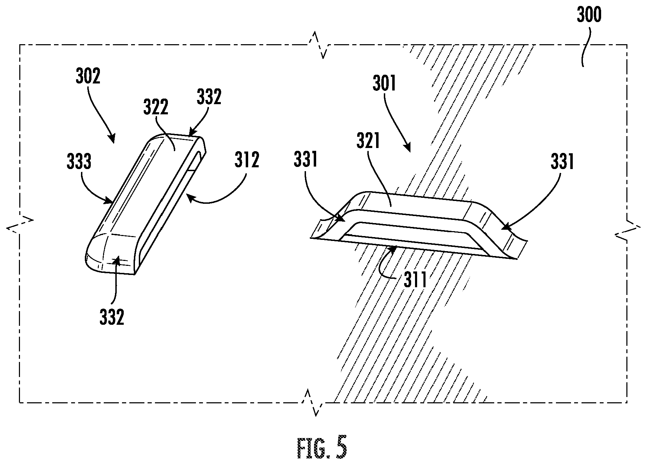

Referring now to Fig. 5, exemplary embodiments of a surface 300 is provided. Embodiments provided in Fig. 5 may be configured as one or more walls 12 of the enclosure 10 depicted and described with regard to Figs. 1-3. The surface 300 includes one or more bridge lances at which the clamp 54 may be removably coupled. The surface 300 forms a first bridge 301 extended along a longitudinal direction co-directional to the longitudinal axis 56 of the cable mounting clamp 54 (Fig. 4). The first bridge 301 includes a member 321 raised from an end wall 331 along a height from the surface 300 to form a first bridge opening 311 between the surface 300 and the member 321. The first bridge opening 311 extends at least partially underneath the member 321. In some embodiments, the first bridge opening 311 extends entirely through the volume between the surface 300 and the member 321.

In certain embodiments, the surface 300 further includes a second bridge 302 extending non-parallel to the first bridge 301. The second bridge 302 may include a member 322 raised from an end wall 332 along a height from the surface 300, such as described with regard to the first bridge 301. The second bridge 302 forms a second bridge opening 312 such as described with regard to the first bridge opening 311. In particular embodiments, the second bridge 302 may include a sidewall 333. The sidewall 333 may extend from the member 322, or additionally from the end wall 332, to the surface 300, such as to form a cap at least partially along the distance of the member 322. The sidewall 333 may particularly form a terminal end of the second bridge opening 312.

Referring now to Fig. 6, an exemplary embodiment of the cable mounting clamp 54 is provided. Fig. 6 provides a perspective cross sectional view of the cable mounting clamp 54 cut along the longitudinal axis 56 and affixed to the surface 300 at the first bridge 301 and the second bridge 302. The fork structure 200 is partially extended into the fork opening 120 at the base 100, such as to compress or clamp the tong structure 140 at the first bridge 301.

Referring now to Fig. 7, a perspective view of an embodiment of the cable mounting clamp 54 viewed from the bottom is provided. In various embodiments, such as depicted in Fig. 4, Fig. 6, and Fig. 7, the base 100 includes a platform 160 at which the base 100 contacts the surface 300. The platform 160 may be positioned at any appropriate portion of the base 100 to provide static support and coupling with the surface 300. The platform 160 may be positioned at terminal ends of the support ramp 114 along the longitudinal direction. The platform 160 may additionally, or alternatively, be positioned at or extended from terminal ends of the outer body 110. The base 100 may accordingly include a pair of platforms 160 at opposing ends along the longitudinal axis 56.

The tong structure 140 may extend along the longitudinal direction between the pair of platforms 160. In particular embodiments, the platforms 160 formed at the base 100 include a forward platform 161 through which the fork structure 200 is initially inserted or slid along the longitudinal direction through corresponding fork openings 120. The base 100 may form a wall 162 extending along the longitudinal direction and forming a channel 164 through which the first bridge 301 is positionable, such as depicted in Fig. 6. The wall 162 may form boundaries or retention features configured to react against the first bridge 301, such as to prevent movement of the base 100 perpendicular, lateral, or orthogonal to the longitudinal axis 56. When the fork structure 200 is inserted into the base 100, the longitudinal faces 204 may push the teeth 144 at the tong structure 140 toward one another at the channel 164. The teeth 144 may then be restrained within the first bridge opening 311 between the end walls 331 of the first bridge 301. Movement of the cable mounting clamp 54 along the longitudinal axis 56 may be limited accordingly.

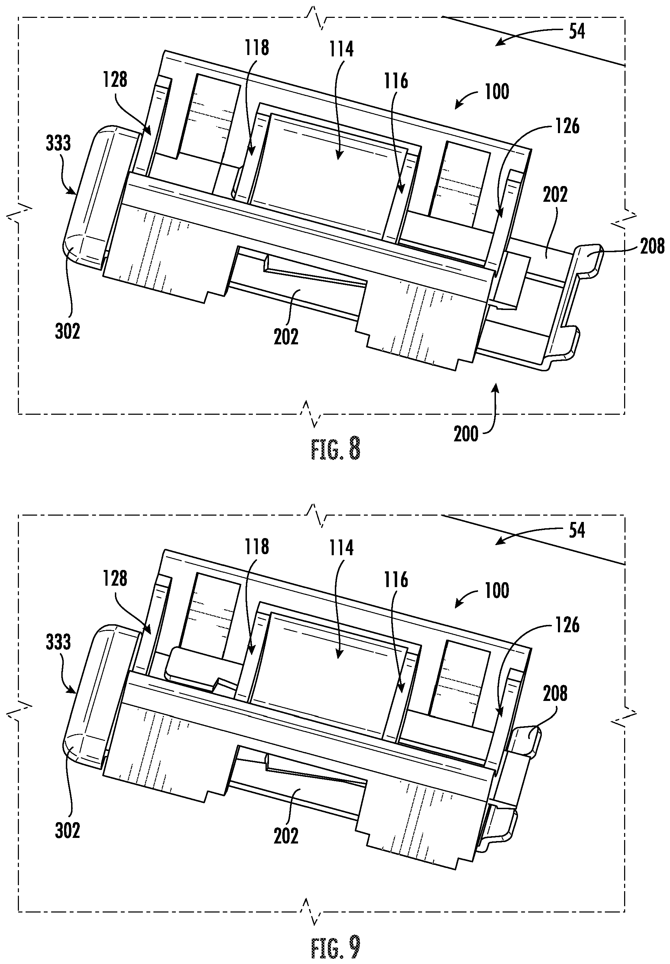

Referring still to Figs. 6-7, and further depicted in the perspective views in Fig. 8-9, certain embodiments of the base 100 include a retaining wall 150 corresponding to the second bridge 302. The retaining wall 150 is extending along the longitudinal direction from the platform 160 into the second bridge opening 312. The sidewall 333 of the second bridge 302 may restrict or limit movement of the base 100 by forming a terminal end at which the retaining wall 150 may contact. The second bridge 302 may form a pivot point at which the retaining wall 150 is inserted into the second bridge 302. In an exemplary embodiment, the cable mounting clamp 54 may form a "rock and lock" setup at which the retaining wall 150 is inserted into the second bridge 302 at an angle relative to the surface 300, then the cable mounting clamp 54 is pivoted or rocked downward onto the surface 300 before the tong structure 140 engages the first bridge 301.

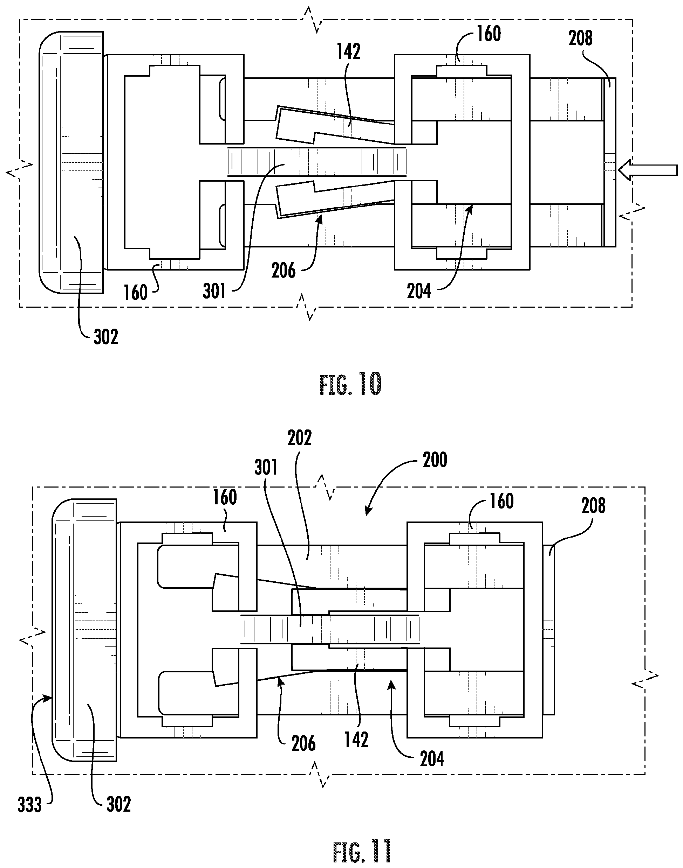

Figs. 8-9 provide perspective views of exemplary embodiments of insertion of the fork structure 200 into the base 100. Fig. 8 provides a perspective view of the fork structure 200 partially inserted through the fork opening 120 with some distance along the longitudinal direction between the stop wall 208 and the base 100. The perspective view in Fig. 8 corresponds substantially with the views provided with regard to Figs. 6-7. Fig. 9 provides a perspective view of the fork structure 200 fully inserted through the fork opening 120 with the stop wall 208 abutting the base 100. Figs. 10-11 provide bottom-up views of exemplary embodiments of insertion of the fork structure 200 into the base 100. Fig. 10 may correspond substantially to Fig. 8. Fig. 11 corresponds substantially to Fig. 9.

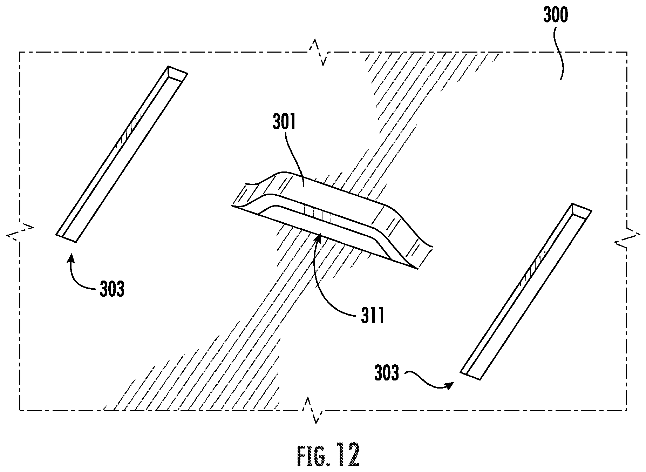

Referring now to Fig. 12, a perspective view of another embodiment of the surface 300 is provided. The embodiment provided in Fig. 12 is configured substantially similarly as depicted and described with regard to Fig. 5. In Fig. 12, the surface 300 forms a slot 303 extending non-parallel to the longitudinal direction. The slot 303 is extended along a depth into the surface 300. In certain embodiments, the slot 304 is extended perpendicular to the longitudinal axis 56 and/or the first bridge 301. Still particular embodiments may include a forward slot and an aft slot relative to a direction along the longitudinal axis 56 along which the fork structure 200 is inserted into the base 100. The first bridge 301 may be positioned along the longitudinal direction between the forward and aft slots 303.

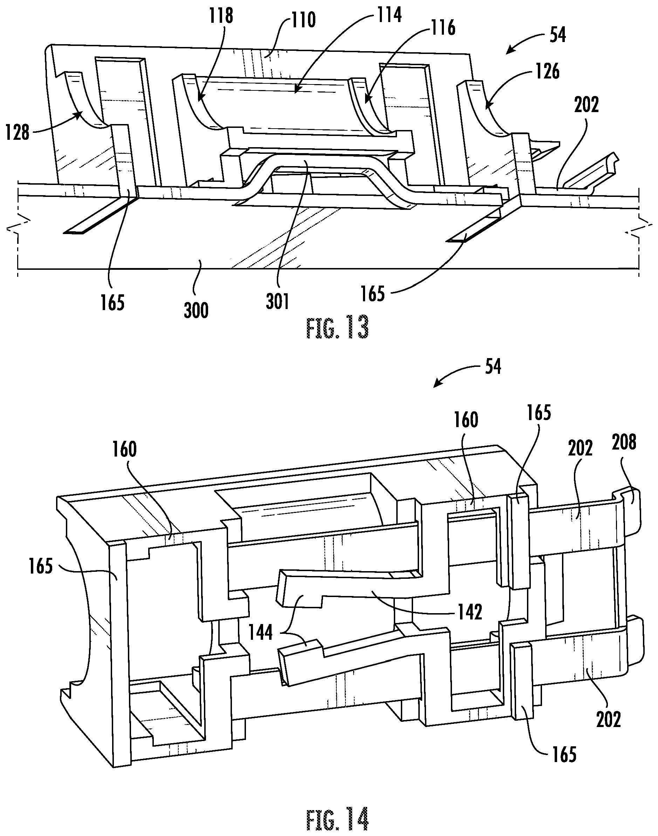

Referring now to Fig. 13, an exemplary embodiment of the cable mounting clamp 54 is provided. Fig. 13 provides a perspective cross sectional view of the cable mounting clamp 54 cut along the longitudinal axis 56 and affixed to an embodiment of the surface 300 such as provided in Fig. 12. Fig. 14 provides a perspective view of an embodiment of the cable mounting clamp 54 viewed from the bottom. The platform 160 at the base 100 forms a retaining wall 165 corresponding to the slot 303 formed in the surface 300. The retaining wall 165 is extendable into a depth of the surface 300 into the slot 303. The retaining wall 165 extended into the slot 303 may fix the base 100 along the longitudinal direction and orthogonal directions relative to the longitudinal axis 56. In an exemplary embodiment, the cable mounting clamp 54 may form a "rock and lock" setup at which the retaining wall 165 is inserted into the slot 303 at an angle relative to the surface 300, then the cable mounting clamp 54 is pivoted or rocked downward onto the surface 300 before the tong structure 140 engages the first bridge 301. As provided above, the fork structure 200 inserted into the base 100 may clamp the tong structure 140 at the first bridge 301, preventing movement of the base 100 along the height and allowing retention of the base 100 to the surface 300.

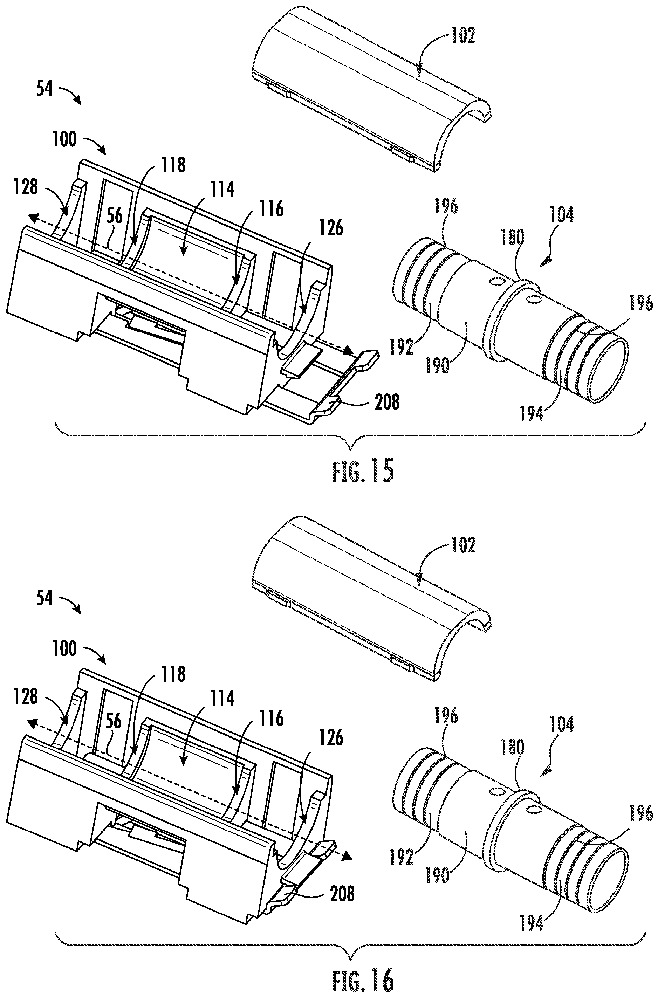

Referring now to Figs. 15-16, perspective exploded views of the clamp 54, cap 102, and roller tube 104 are provided. The embodiment of the clamp 54 in Fig. 15 illustrates a first position of the fork structure 200 partially inserted through the fork opening 120 into the base 100, such as depicted and described with regard to Fig. 10. The embodiment of the clamp 54 in Fig. 16 illustrates a second position of the fork structure 200 fully inserted through the fork opening 120 into the base 100, such as depicted and described with regard to Fig. 11.

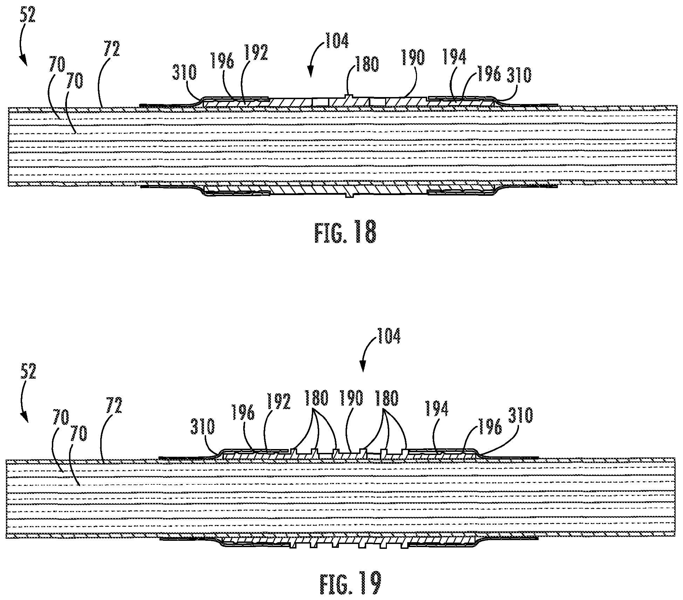

Referring generally to Figs. 1-19, in certain embodiments, the support ramp 114 may include first and second rails 116, 118, respectively. In some embodiments, the roller tube 104 may include one or more outer flanges 180, which may be an annular flange as shown. The outer flange 180 may, for example, be positioned generally at a longitudinal center point (e.g., along axis 56). In particular embodiments including only a single outer flange 180, such as depicted in Fig. 18, the roller tube 104 may be translatable such that the single outer flange 180 can float between and selectively contact one of the first rail 116 or second rail 118. For example, the roller tube 104 can slide along the axis 56 in one direction until the flange 180 contacts the first rail 116, and can slide along the axis 56 in the opposite direction until the flange 180 contacts the second rail 118. Such arrangement of the outer flange 180 floating between the rails 116, 118 also advantageously reduces or prevents the risk of the roller tube 104 becoming unsecured from the base 100.

In other embodiments, as illustrated in Fig. 19, roller tube 104 may include a plurality of outer flanges 180, each of which may be an annular flange as shown. The outer flanges 180 may, for example, be spaced apart from each other along the axis 56. Further, in some embodiments as shown, cap 102 may be utilized, and one or more grooves 182 (each of which may be an annular groove) may be defined in an inner surface of the cap 102. Roller tube 104 may be translatable such that a different outer flange 180 may be in selective contact with each of the first rail 116 and second rail 118 in various positions along the axis 56. Further, in exemplary embodiments when the cap 102 is utilized, the roller tube 104 may be translatable such that each of the plurality of grooves 182 may selectively accommodate one or more of the plurality of outer flanges 180. Accordingly, in various different positions of the roller tube 104 along the axis 56, a different outer flange 180 may be in contact with each of the first rail 116 and second rail 118 and, if a cap 102 is utilized, a different outer flange 180 may be accommodated in each groove 182 or the groove 182 may be empty, depending on the position of the roller tube 104 along the axis 56.

In various embodiments, body 110 may form a third rail 126 substantially parallel to the first rail 116 and separated along the axis 56 from the first rail 116. Body 110 may further form a fourth rail 128 substantially parallel to the second rail 118 and separated along the axis 56 from the second wall 118. The third rail 126 and the fourth rail 128 may each be positioned outside of the first and second rails 116, 118 along the longitudinal axis 56. For instance, the third rail 126 may be formed proximate to the stop wall 208 relative to the first rail 116. The fourth rail 128 may be formed more distal from the stop wall 208 of the fork structure 200 relative to the second rail 118. In certain embodiments, the platform 160 (Fig. 10-11) is positioned at a bottom face from the first and third rails 116, 126, and another platform 160 is positioned at a bottom face from the second and fourth walls 118, 128.

In further exemplary embodiments, the roller tube 104 may be rotatably mounted on the support ramp 114, and rotatable about the axis 56 (e.g., relative to the support ramp 114). For example, roller tube 104 may be positioned in the inner channel 112 such that the roller tube 104 extends along the axis 56. Further, the roller tube 104 may be in contact with the support ramp 114. Rotation about the axis 56 may be relative to both the base 100 and the cap 102 (if utilized).

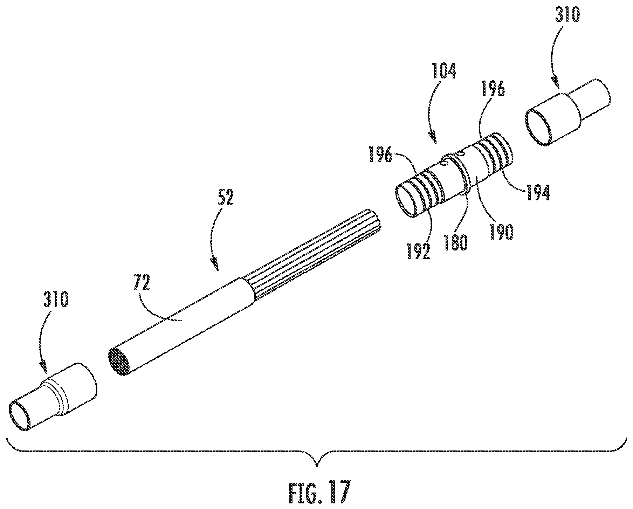

Referring now to Figs. 17-19, in some embodiments, roller tube 104 may include a central portion 190, a first end portion 192, and a second end portion 194. The first and second end portions 192, 194 extend in opposite directions from the central portion 190, such as in opposite directions along the axis 56. In some embodiments, the outer flange(s) 180 may be disposed on the central portion 190. In some embodiments, the first and second end portions 192, 194 may each include one or more ribs 196, which may be annular ribs as shown.

Further, in some embodiments, clamp 54 may include one or more heat shrink tubes 310. Each heat shrink tube 310 may be connected to the roller tube 104. For example, in some embodiments as shown, a heat shrink tube 310 may be connected to and extend from the first end portion 192, and a heat shrink tube 310 may be connected to and extend from the second end portion 194. In some embodiments, ribs 196 may contact the heat shrink tube(s) 310 and assist in maintaining the location of the heat shrink tube(s) 310 by preventing the heat shrink tube(s) 310 from slipping from the roller tube 104 (such as the end portions 192, 194 thereof).

Embodiments of the clamp 54 and enclosure 10 provided herein may further illustrate one or more steps of a method for mounting a cable to an enclosure. The method includes translating a fork structure along a longitudinal direction into an opening at a base at which a cable positioned, wherein the cable is extended along the longitudinal direction. In various embodiments, translating the fork structure into the opening at the base includes sliding prongs of the fork structure into contact with members of the tong structure.

The method further includes compressing members of a tong structure at the base toward a longitudinal axis via translating the fork structure into sliding contact with the tong structure, wherein compressing the members positions teeth at the tong structure within an opening at a bridge to restrain movement of the base. In certain embodiments, compressing members of the tong structure includes compressing members toward the longitudinal axis. In still certain embodiments, compressing members of the tong structure at the base toward the longitudinal axis includes pressing a longitudinal face of the fork structure against members of the tong structure.

In particular embodiments, translating the fork structure into the opening at the base includes sliding an angled face of the fork structure into contact with an angled face at the tong structure. In still particular embodiments, compressing members of the tong structure at the base toward the longitudinal axis includes pressing a longitudinal face of the fork structure against members of the tong structure after sliding the angled face of the fork structure into contact with the angled face at the tong structure.

In some embodiments, the method includes abutting a stop wall of the fork structure to the base when prongs of the fork structure are fully inserted through the opening at the base.

In still various embodiments, the method includes removing the fork structure from the base to allow for movement of the base relative to a surface at which the base is attached when the teeth are positioned within the opening at the bridge.

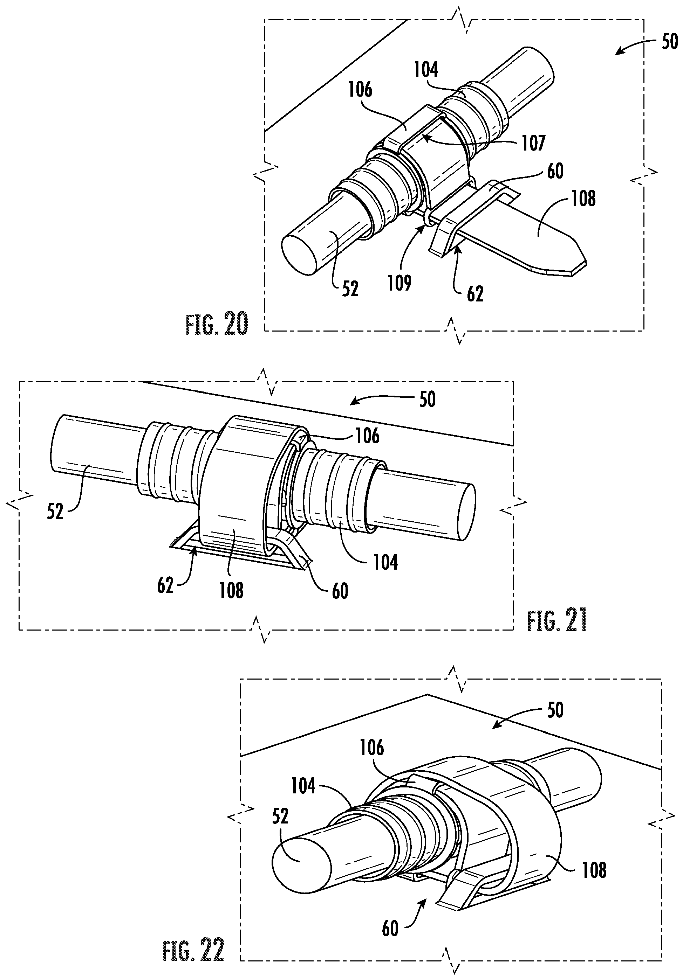

Referring now to Figs. 20-23, perspective views of embodiments of a cable mounting clamp 54 are provided. Embodiments provided in Figs. 20-22 may form an outback clamp including a roller tube forming a sleeve substantially surrounding a cable. One or more bridges or bridge lances, such as a first bridge, is formed at the roller tube. One or more additional bridges or bridge lances, such as a second bridge, is formed at a surface of the enclosure. The bridges each extend along a length of the roller tube co-directional to an extension of the cable through the roller tube. A strap, such as a hook and loop strap, is extendable through the bridges formed at the roller tube and the surface, such as to wrap around the roller tube and through the bridges. The bridges may be positionable substantially side-by-side or adjacent with one another. For instance, the bridges each extend co-directional to one another. The bridges may furthermore extend co-directional to an extension of the cable through the roller tube. The roller tube may affix directly to the surface such that the roller tube is positioned side-by-side with the bridge at the surface of the enclosure. In various embodiments, the bridge formed at the roller tube is a unitary, integral, monolithic structure with a substantially cylindrical body. In still certain embodiments, the bridge formed at the surface is a unitary, integral structure formed with surface at the enclosure. The cable may be configured to extend through the roller tube along the longitudinal direction. The strap may be configured to extend through the bridge along a direction perpendicular, oblique, or generally non-parallel to the longitudinal direction.

Embodiments provided herein may be attached to one or more bridge links 60 at the enclosure 10, such as the first bridge 301 or the second bridge 302 depicted in Fig. 5. Embodiments provided in Figs. 20-22 depict the cable 52 mounted to a surface 300, such as described in various embodiments herein. The clamp 54 provided in Figs. 20-22 includes one or more embodiments of the roller tube 104 such as described above. In a particular embodiment, the roller tube 104 forms a separable structure from an exterior jacket 72 or other component of the cable 52. The roller tube 104 may generally form a sleeve configured to surround or substantially surround the cable 52.

The roller tube 104 includes one or more bridge lances or bridges 106 extending along a length of the roller tube 104. The bridge 106 may be formed as an integral, unitary, monolithic structure with the roller tube 104, such as integral with a substantially cylindrical body of the roller tube 104. The bridge 106 and the roller tube 104 may be configured to extend co-directional to an extension of the cable 52 through the roller tube 104. The bridge 106 at the roller tube 104 may furthermore extend co-directional to the bridge 60 at the surface. The bridges 60, 106 may be aligned substantially side-by-side or adjacent with one another. A retention band, such as a belt or strap 108, is extendable around the roller tube 104 and through an opening 107 formed by each bridge 106 at the roller tube 104. The strap 108 is furthermore extendable through an opening 62 formed at the bridge 60 at the surface. It should be appreciated that the opening 62 may correspond to the first bridge opening 311 or the second bridge opening 312, such as depicted and described in regard to Fig. 5. In certain embodiments, the strap 108 and the bridge 106 may together form a hook and loop strap, in which a first side of the strap 108 is configured to removably latch, attach, or adhere to a second side of the strap 108 opposite of the first side. The strap 108 may include an end 109 from which a belt of the strap is extending and through which the strap 108.

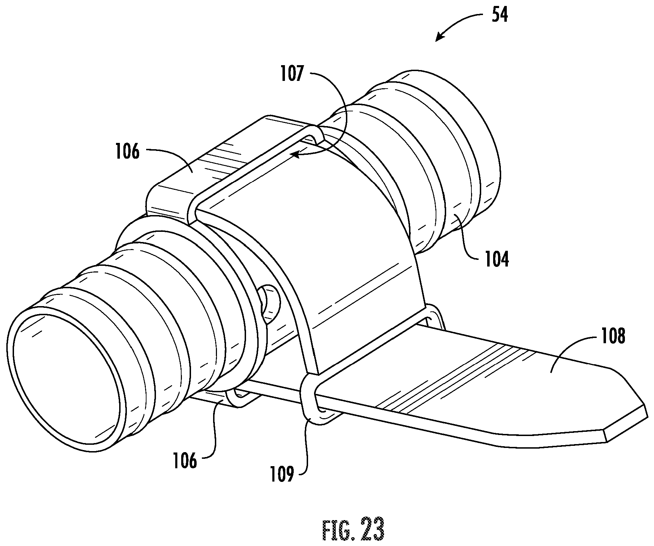

In various embodiments, the roller tube 104 includes a plurality of bridges 106. Certain embodiments include bridge 106 formed at an upper half of roller tube 104. Referring to Fig. 23, the embodiment depicted further illustrates the roller tube 104 forming at least one bridge 106 at a lower half of the roller tube 104. The upper half bridge may be formed at a substantially top dead center or zero degree location. The lower half bridge may be formed at a substantially bottom dead center or 180 degree location. The lower half bridge may particularly abut the surface. The lower half bridge is positioned generally between a body of the roller tube 104 and the surface. The strap 108 may loop around the roller tube 104 one or more times through the opening 107 at bridge 106 and extend through the opening 62 at bridge 60 connected to the surface. The strap 108 may additionally loop one or more times around the roller tube 104 outside of the bridge 106, such as depicted in Figs. 21-22. In still various embodiments, a single strap 108 may loop around a plurality of roller tubes 104 utilizing a single bridge at the surface 300 (e.g., bridge 301, 302). Such an embodiment may desirably increase capacity for cable assemblies at the enclosure 10. Various embodiments may include the strap 108 attaching the surface 300 to a greater plurality of smaller-diameter cables relative to a lesser plurality of relatively larger-diameter cables.

Cable assemblies 50 in accordance with the present disclosure include a cable 52 and one or more cable mounting clamps 54. The clamps 54 may be installable onto a cable 52 by a user, or may be factory pre-installed on the cable 52. In exemplary embodiments as shown, cable 52 is a fiber optic cable 52 which includes a plurality of optical fibers 70 disposed within an outermost exterior jacket 72. Mounting of a clamp 54 on a surface may, in exemplary embodiments, further mount the associated cable assembly 50 and cable 52 thereof, thus efficiently, securely and removably positioning the cable 52 on the surface.

When installed, a cable 52 may be inserted through a roller tube 104. Additionally, in some embodiments as shown, cable 52 may be inserted through the heat shrink tube(s) 310 that are connected to the roller tube 104, such that the heat shrink tube(s) 310 are also connected to the cable 52. In these embodiments, the heat shrink tube(s) 310 may be shrunk onto the cable 52 and roller tube 104. Because the roller tube 104 is disposed in the inner channel 112, the cable 52 may further extend through the inner channel 112, such as along the axis 56. Cable 52 may be generally fixed relative to the roller tube 104, such as in some embodiments due to contact by the heat shrink tube(s) 310 and/or epoxy or another suitable binder disposed between the cable 52 and roller tube 104, and thus may be generally not movable relative to the roller tube 104. However, advantageously, the cable 52 may be translatable with the roller tube 104 along the longitudinal axis 56 and, in some embodiments, rotatable with the roller tube 104 along the longitudinal axis 56.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A cable mounting clamp (54) for mounting a cable (52) to a surface, the cable mounting clamp (54) comprising:
a base (100) removably connectable to the surface, the base (100) comprising an outer body (110) which defines an inner channel (112) and a support ramp (114) disposed within the inner channel (112), the inner channel (112) extending along a longitudinal direction co-directional to a longitudinal axis;
a tong structure (140) connected to the base (100), the tong structure (140) extending along the longitudinal direction;
**characterized in that** the tong structure (140) extends between the inner channel (112) and the surface; and
the cable mounting clamp (54) comprises a fork structure (200) slidable along the longitudinal direction, wherein the fork structure (200) comprises a pair of prongs (202) extended along the longitudinal direction, wherein each prong (202) is in sliding contact with the tong structure (140), wherein each prong (202) forms a longitudinal face (204) extending along the longitudinal direction, and wherein each prong (202) forms an angled face (206) extending away from the longitudinal axis and corresponding to an angled face (146) at the tong structure (140).

2. The cable mounting clamp (54) of claim 1, wherein the base (100) comprises a pair of platforms (160) at which the base (100) contacts the surface, the tong structure (140) extending along the longitudinal direction between the pair of platforms (160).

3. The cable mounting clamp (54) of claim 2, wherein the fork structure (200) is slidable along the pair of platforms (160).

4. The cable mounting clamp (54) of claim 1, the fork structure (200) comprising a stop wall (208) extending along a height direction, the pair of prongs (202) extending along the longitudinal direction from the wall (162).

5. The cable mounting clamp (54) of claim 4, wherein a hook (210) is formed at a distal end of the prong (202) from the stop wall (208).

6. The cable mounting clamp (54) of claim 1, wherein the base (100) forms an opening (120) through which the pair of prongs (202) of the fork structure (200) are extendable.

7. The cable mounting clamp (54) of claim 1, wherein the tong structure (140) comprises a pair of members (142) each extending substantially along the longitudinal direction, wherein each member (142) forms a tooth (144) at a terminal end of each member (142).

8. The cable mounting clamp (54) of claim 7, wherein the pair of members (142) is sprung along an orthogonal direction relative to the longitudinal direction.

9. The cable mounting clamp (54) of claim 7, wherein the prongs (202) of the fork structure (200) are configured to apply a force at the pair of members (142) of the tong structure (140) toward the longitudinal axis when the fork structure (200) is in contact with tong structure (140).

10. A fiber optic distribution enclosure (10) comprising:
a surface (300) comprising a first bridge (301) extended along a longitudinal direction co-directional to a longitudinal axis; and
a cable mounting clamp (54) of any preceding claim.

11. The enclosure (10) of claim 10, wherein the surface (300) forms a slot (303) extending non-parallel to the longitudinal direction.

12. The enclosure (10) of claim 11, wherein the base (100) forms a retaining wall (165) corresponding to the slot (303), and wherein the retaining wall (165) is extendable along a height direction into the slot (303).

13. The enclosure (10) of claim 10, wherein the surface (300) comprises a second bridge (302) extending non-parallel to the first bridge (301).

14. The enclosure (10) of claim 13, wherein the base (100) forms a retaining wall (150) corresponding to the second bridge (302), and wherein the retaining wall (150) is extendable into an opening (312) formed by the second bridge (302).

15. The enclosure (10) of claim 10, wherein the base (100) forms an opening (120) through which the pair of prongs (202) of the fork structure (200) are extendable, and wherein the pair of prongs (202) of the fork structure (200) is configured to extend co-directional to the longitudinal axis through the opening (120) formed at the base (100).

## Patentansprüche

1. Kabelbefestigungsklemme (54) zum Befestigen eines Kabels (52) an einer Oberfläche, wobei die Kabelbefestigungsklemme (54) umfasst:
ein von der Oberfläche lösbares und mit dieser verbindbares Basisteil (100), wobei das Basisteil (100) einen Außenkörper (110) umfasst, der einen inneren Kanal (112) und eine innerhalb des inneren Kanals (112) angeordnete Stützrampe (114) definiert, wobei sich der innere Kanal (112) entlang einer Längsrichtung erstreckt, die mit einer Längsachse gleichgerichtet ist;
eine mit dem Basisteil (100) verbundene Zangenstruktur (140), wobei sich die Zangenstruktur (140) entlang der Längsrichtung erstreckt;
**dadurch gekennzeichnet, dass** sich die Zangenstruktur (140) zwischen dem inneren Kanal (112) und der Oberfläche erstreckt; und
die Kabelbefestigungsklemme (54) eine entlang der Längsrichtung verschiebbare Gabelstruktur (200) umfasst, wobei die Gabelstruktur (200) ein Paar von Zinken (202) umfasst, die sich entlang der Längsrichtung erstrecken, wobei jede Zinke (202) mit der Zangenstruktur (140) in Gleitkontakt ist, wobei jede Zinke (202) eine Längsfläche (204) bildet, die sich entlang der Längsrichtung erstreckt, und wobei jede Zinke (202) eine Schrägfläche (206) bildet, die sich von der Längsachse weg erstreckt und einer Schrägfläche (146) an der Zangenstruktur (140) entspricht.

2. Kabelbefestigungsklemme (54) nach Anspruch 1, wobei das Basisteil (100) ein Paar von Plattformen (160) umfasst, an denen das Basisteil (100) in Kontakt mit der Oberfläche steht, wobei sich die Zangenstruktur (140) entlang der Längsrichtung zwischen dem Paar von Plattformen (160) erstreckt.

3. Kabelbefestigungsklemme (54) nach Anspruch 2, wobei die Gabelstruktur (200) entlang des Paars von Plattformen (160) verschiebbar ist.

4. Kabelbefestigungsklemme (54) nach Anspruch 1, wobei die Gabelstruktur (200) eine sich entlang einer Höhenrichtung erstreckende Anschlagwand (208) umfasst, wobei sich das Paar von Zinken (202) entlang der Längsrichtung von der Wand (162) erstreckt.

5. Kabelbefestigungsklemme (54) nach Anspruch 4, wobei ein Haken (210) an einem distalen Ende der Zinke (202) von der Anschlagwand (208) gebildet ist.

6. Kabelbefestigungsklemme (54) nach Anspruch 1, wobei das Basisteil (100) eine Öffnung (120) bildet, durch welche das Paar von Zinken (202) der Gabelstruktur (200) hindurch erstreckbar ist.

7. Kabelbefestigungsklemme (54) nach Anspruch 1, wobei die Zangenstruktur (140) ein Paar von Elementen (142) umfasst, die sich jeweils im Wesentlichen entlang der Längsrichtung erstrecken, wobei jedes Element (142) an einem endseitigen Ende jedes Elements (142) einen Zahn (144) bildet.

8. Kabelbefestigungsklemme (54) nach Anspruch 7, wobei das Paar von Elementen (142) entlang einer relativ zu der Längsrichtung orthogonalen Richtung federnd ist.

9. Kabelbefestigungsklemme (54) nach Anspruch 7, wobei die Zinken (202) der Gabelstruktur (200) dazu ausgebildet sind, auf das Paar von Elementen (142) der Zangenstruktur (140) eine Kraft in Richtung der Längsachse auszuüben, wenn die Gabelstruktur (200) mit der Zangenstruktur (140) in Kontakt steht.

10. Glasfaserverteil-Gehäuse (10), umfassend:
eine Oberfläche (300), die eine erste Brücke (301) umfasst, die sich entlang einer Längsrichtung erstreckt, die mit einer Längsachse gleichgerichtet ist; und
eine Kabelbefestigungsklemme (54) nach einem vorstehenden Anspruch.

11. Gehäuse (10) nach Anspruch 10, wobei die Oberfläche (300) einen Schlitz (303) bildet, der sich nicht parallel zu der Längsrichtung erstreckt.

12. Gehäuse (10) nach Anspruch 11, wobei das Basisteil (100) eine dem Schlitz (303) entsprechende Haltewand (165) bildet und wobei die Haltewand (165) entlang einer Höhenrichtung in den Schlitz (303) hinein erstreckbar ist.

13. Gehäuse (10) nach Anspruch 10, wobei die Oberfläche (300) eine zweite Brücke (302) umfasst, die sich nicht parallel zu der ersten Brücke (301) erstreckt.

14. Gehäuse (10) nach Anspruch 13, wobei das Basisteil (100) eine der zweiten Brücke (302) entsprechende Haltewand (150) bildet, und wobei die Haltewand (150) in eine durch die zweite Brücke (302) gebildete Öffnung (312) hinein erstreckbar ist.

15. Gehäuse (10) nach Anspruch 10, wobei das Basisteil (100) eine Öffnung (120) bildet, durch welche das Paar von Zinken (202) der Gabelstruktur (200) hindurch erstreckbar ist, und wobei das Paar von Zinken (202) der Gabelstruktur (200) dazu ausgebildet ist, sich mit der Längsachse gleichgerichtet durch die an dem Basisteil (100) gebildete Öffnung (120) zu erstrecken.

## Revendications

1. Pince de montage de câble (54) pour monter un câble (52) sur une surface, la pince de montage de câble (54) comprenant :
une base (100) pouvant être reliée de manière amovible à la surface, la base (100) comprenant un corps externe (110) qui définit un canal interne (112) et une rampe d'appui (114) disposée à l'intérieur du canal interne (112), le canal interne (112) s'étendant selon une direction longitudinale codirectionnelle à un axe longitudinal ;
une structure en pince (140) reliée à la base (100), la structure en pince (140) s'étendant selon la direction longitudinale ;
**caractérisée en ce que** la structure en pince (140) s'étend entre le canal interne (112) et la surface ; et
la pince de montage de câble (54) comprend une structure en fourche (200) coulissante selon la direction longitudinale, dans laquelle la structure en fourche (200) comprend une paire de branches (202) étendues selon la direction longitudinale, dans laquelle chaque branche (202) est en contact coulissant avec la structure en pince (140), dans laquelle chaque branche (202) forme une face longitudinale (204) s'étendant selon la direction longitudinale, et dans laquelle chaque branche (202) forme une face inclinée (206) s'étendant à l'écart de l'axe longitudinal et correspondant à une face inclinée (146) au niveau de la structure en pince (140).

2. Pince de montage de câble (54) selon la revendication 1, dans laquelle la base (100) comprend une paire de plateformes (160) au niveau desquelles la base (100) est en contact avec la surface, la structure en pince (140) s'étendant selon la direction longitudinale entre la paire de plateformes (160).

3. Pince de montage de câble (54) selon la revendication 2, dans laquelle la structure en fourche (200) est coulissante le long de la paire de plateformes (160).

4. Pince de montage de câble (54) selon la revendication 1, la structure en fourche (200) comprenant une paroi d'arrêt (208) s'étendant selon une direction en hauteur, la paire de branches (202) s'étendant selon la direction longitudinale à partir de la paroi (162).

5. Pince de montage de câble (54) selon la revendication 4, dans laquelle un crochet (210) est formé à une extrémité distale de la branche (202) à partir de la paroi d'arrêt (208).

6. Pince de montage de câble (54) selon la revendication 1, dans laquelle la base (100) forme une ouverture (120) à travers laquelle la paire de branches (202) de la structure en fourche (200) peut s'étendre.

7. Pince de montage de câble (54) selon la revendication 1, dans laquelle la structure en pince (140) comprend une paire de bras (142) s'étendant chacun sensiblement selon la direction longitudinale, dans laquelle chaque bras (142) forme une dent (144) à une extrémité terminale de chaque bras (142).

8. Pince de montage de câble (54) selon la revendication 7, dans laquelle la paire de bras (142) est sollicitée élastiquement selon une direction orthogonale par rapport à la direction longitudinale.

9. Pince de montage de câble (54) selon la revendication 7, dans laquelle les branches (202) de la structure en fourche (200) sont configurées pour appliquer une force à la paire de bras (142) de la structure en pince (140) vers l'axe longitudinal lorsque la structure en fourche (200) est en contact avec la structure en pince (140).

10. Boîtier de distribution de fibres optiques (10) comprenant :
une surface (300) comprenant un premier pont (301) étendu selon une direction longitudinale codirectionnelle à un axe longitudinal ; et
une pince de montage de câble (54) selon une quelconque revendication précédente.

11. Boîtier (10) selon la revendication 10, dans lequel la surface (300) forme une fente (303) s'étendant de manière non parallèle à la direction longitudinale.

12. Boîtier (10) selon la revendication 11, dans lequel la base (100) forme une paroi de retenue (165) correspondant à la fente (303), et dans lequel la paroi de retenue (165) peut s'étendre selon une direction en hauteur dans la fente (303).

13. Boîtier (10) selon la revendication 10, dans lequel la surface (300) comprend un second pont (302) s'étendant de manière non parallèle au premier pont (301).

14. Boîtier (10) selon la revendication 13, dans lequel la base (100) forme une paroi de retenue (150) correspondant au second pont (302), et dans lequel la paroi de retenue (150) peut s'étendre dans une ouverture (312) formée par le second pont (302).

15. Boîtier (10) selon la revendication 10, dans lequel la base (100) forme une ouverture (120) à travers laquelle la paire de branches (202) de la structure en fourche (200) peut s'étendre, et dans lequel la paire de branches (202) de la structure en fourche (200) est configurée pour s'étendre de manière codirectionnelle à l'axe longitudinal à travers l'ouverture (120) formée au niveau de la base (100).
